# DEMANDE DE BREVET EUROPEEN

(11) **EP 1 132 255 A2**
(43) Date de publication de la demande: **12.09.2001**
(21) Numéro de dépôt: 01400271.1
(22) Date de dépôt: 02.02.2001
(51) Int. Cl.: B60N 3/10

(54) **Porte-gobelet destiné à être intégré dans une pièce d'équipement de véhicule automobile**

(30) Priorité: 08.02.2000 FR 0001546
(71) Demandeur: Faurecia Industries, 92100 Boulogne-Billancourt (FR)
(72) Inventeur: Baume, Hugues, 25200 Montbeliard (FR)
(74) Mandataire: Habasque, Etienne Joel Jean-François

(57) **Abrégé**

Ce porte-gobelet est caractérisé en ce qu'il comporte une embase fixe (1) adaptée pour être reliée à la pièce d'équipement et un volet mobile (2) dont le bord inférieur (3) comporte des moyens (4) d'articulation sur le bord avant inférieur (5) correspondant de l'embase (1), l'embase et le volet comportant des empreintes complémentaires de réception du gobelet (6) et des moyens complémentaires de contrôle des déplacements du volet par rapport à l'embase, comportant au moins un organe élastique relié à l'une des pièces, embase (1) ou volet (2), et une came à profil en dent de scie reliée à l'autre des pièces, volet (2) ou embase (1), la came à profil en dent de scie comportant des sommets et des creux définis par des surfaces en rampe de la came et dont les creux sont adaptés pour coopérer avec l'organe élastique pour délimiter différentes positions d'indexation du volet par rapport à l'embase.

## Description

La présente invention concerne un porte-gobelet destiné à être intégré dans une pièce d'équipement de véhicule automobile.

On assiste depuis plusieurs années à une intégration croissante de porte-gobelets de ce type dans les véhicules automobiles.

De très nombreux modes de réalisation de ceux-ci ont en effet été développés.

Cependant, la plupart de ceux-ci présente un certain nombre d'inconvénients, notamment au niveau de la complexité de leur structure, de leur cinématique et du nombre de pièces utilisées.

Le but de l'invention est donc de résoudre ces problèmes.

A cet effet, l'invention a pour objet un porte-gobelet destiné à être intégré dans une pièce d'équipement de véhicule automobile, caractérisé en ce qu'il comporte une embase fixe adaptée pour être reliée à la pièce d'équipement et un volet mobile dont le bord inférieur comporte des moyens d'articulation sur le bord avant inférieur correspondant de l'embase, l'embase et le volet comportant des empreintes complémentaires de réception du gobelet et des moyens complémentaires de contrôle des déplacements du volet par rapport à l'embase, comportant au moins un organe élastique relié à l'une des pièces, embase ou volet, et une came à profil en dent de scie reliée à l'autre des pièces, volet ou embase, la came à profil en dent de scie comportant des sommets et des creux définis par des surfaces en rampe de la came et dont les creux sont adaptés pour coopérer avec l'organe élastique pour délimiter différentes positions d'indexation du volet par rapport à l'embase.

L'invention sera mieux comprise à la lecture de la description qui va suivre, donnée uniquement à titre d'exemple et faite en se référant aux dessins annexés, sur lesquels:
- la Fig.1 représente une vue schématique de côté en coupe d'un porte-gobelet selon l'invention ;
- la Fig.2 représente une vue de détail de ce porte-gobelet illustrant la structure d'un exemple de réalisation de moyens de contrôle du déplacement d'un volet par rapport à une embase, entrant dans la constitution de ce porte-gobelet ; et
- la Fig.3 illustre le fonctionnement de ce porte-gobelet.

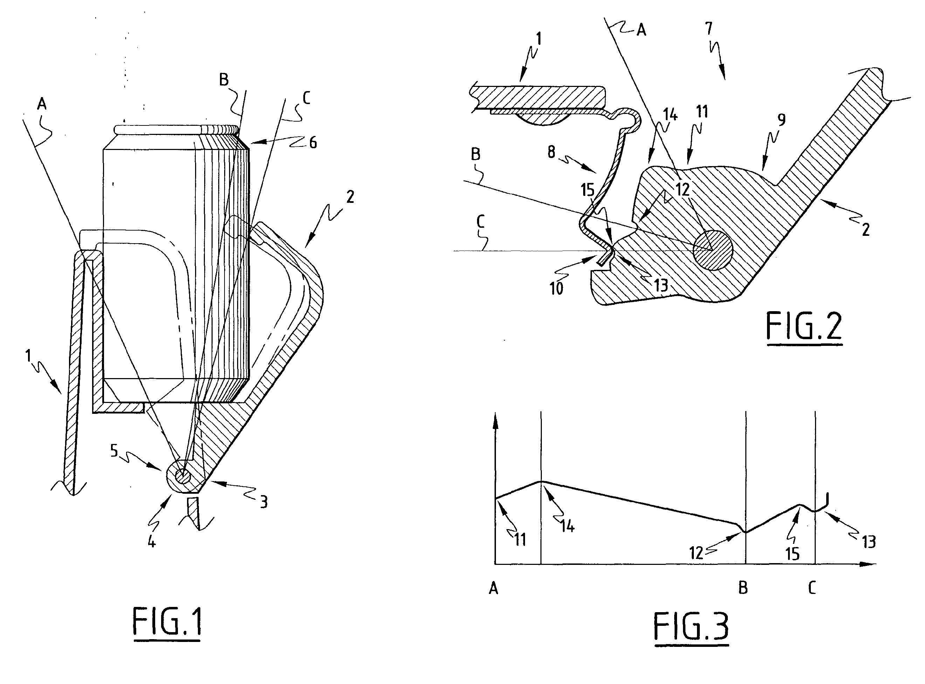

On a en effet représenté sur la figure 1, un exemple de réalisation d'un porte-gobelet selon l'invention qui est destiné à être intégré dans une pièce d'équipement de véhicule automobile.

Ce porte-gobelet comporte une embase fixe désignée par la référence générale 1, qui est adaptée pour être reliée à la pièce d'équipement et un volet mobile désigné par la référence générale 2 sur cette figure, dont le bord inférieur désigné par la référence générale 3, comporte des moyens d'articulation 4 sur le bord avant inférieur correspondant 5 de l'embase1.

Ces moyens d'articulation peuvent présenter n'importe quelle structure appropriée.

L'embase et le volet comportent sur leurs surfaces en regard, des empreintes complémentaires par exemple entrecroisées, de réception d'un gobelet et de maintien de celui-ci en position de façon classique.

On notera à cet égard que dans la présente description, le terme « gobelet» est utilisé pour désigner non seulement un gobelet proprement dit, mais également tout autre objet destiné à recevoir par exemple un liquide, tel qu'une boîte-boisson ou autre.

Dans l'exemple représenté sur cette figure 1, une boîte-boisson désignée par la référence générale 6 est en effet illustrée en position dans ce porte-gobelet.

On notera également que dans cet exemple, l'embase et le volet présentent des sections transversales complémentaires en forme générale de L.

Le volet et l'embase sont également munis de moyens complémentaires de contrôle des déplacements de ce volet par rapport à cette embase.

Un exemple de réalisation de ces moyens est représenté sur la figure 2.

On reconnaît en effet sur cette figure 2, des portions de l'embase 1 et du volet 2.

Les moyens complémentaires de dontrôle des déplacements du volet par rapport à l'embase sont quant à eux désignés par la référence générale 7 et comprennent par exemple au moins un organe élastique désigné par la référence générale 8 et une came à profil en dent de scie désignée par la référence générale 9.

L'organe élastique 8 est relié à l'une des pièces, embase ou volet, et dans l'exemple décrit, à l'embase 1, tandis que la came 9 est quant à elle reliée à l'autre pièce, volet ou embase, et dans l'exemple décrit au volet 2. La came 9 est par exemple venue de matière avec le volet 2.

L'organe élastique se présente dans l'exemple décrit sous la forme d'une languette dont une extrémité est fixée sur l'embase 1 et dont l'autre extrémité comporte une portion repliée formant zone de contact 10 avec le profil en dent de scie de la came 9.

Comme cela est illustré sur les figures 2 et 3, cette came 9 à profil à dent de scie comporte donc des sommets et des creux qui sont définis par des surfaces en rampe de celle-ci.

C'est ainsi par exemple que la came illustrée sur ces figures comporte trois creux désignés par les références 11,12 et 13, séparés par deux sommets respectivement 14 et 15.

La figure 3 illustre le déplacement du volet par rapport à l'embase.

En fait, les creux 11,12 et 13 de cette came 9 définissent en coopération avec l'organe élastique 8 et plus particulièrement son extrémité 10, des positions d'indexation du volet par rapport à l'embase.

C'est ainsi que lorsque le volet est en position d'obturation complète du porte-gobelet, la languette 8 et plus particulièrement son extrémité repliée 10 est située dans le creux 11 de la came 9.

Une position d'ouverture intermédiaire du volet est définie par le creux 12, tandis qu'une position d'ouverture complète de celui-ci par rapport à l'embase est définie par le creux 13.

Les surfaces en rampe entre ces creux permettent de solliciter élastiquement le volet dans l'une ou l'autre de ces positions, pour assurer un certain maintien en position du volet et donc du gobelet posé dans ce porte-gobelet.

A cet égard, on notera que les creux et/ou les sommets de la came peuvent être à des niveaux différents par rapport à l'axe des moyens d'articulation du volet sur l'embase, pour faire varier l'effort à exercer sur le volet pour le déplacer dans l'une ou l'autre de ses positions et le maintenir plus ou moins fermement dans celle-ci.

Il va de soi bien entendu que d'autres modes de réalisation de ces moyens de contrôle peuvent être envisagés.

Dans l'exemple décrit, une position de fermeture complète, une position d'ouverture intermédiaire et une position d'ouverture complète référencées par A,B et C respectivement sur ces figures 1 à 3, ont été décrites, mais il va de soi bien entendu qu'un nombre différent de positions d'ouverture intermédiaire peuvent être prévues en configurant de façon correspondante la came.

De nombreux modes de réalisation différents de ces moyens peuvent également être envisagés.

On conçoit alors que cette structure présente un certain nombre d'avantages dans la mesure où elle permet d'obtenir un porte-gobelet robuste, effaçable, de conception très simple, capable de s'intégrer facilement dans les pièces d'équipement des véhicules automobiles et permettant de recevoir différentes tailles de gobelets ou autres.

## Revendications

1. Porte-gobelet destiné à être intégré dans une pièce d'équipement de véhicule automobile, **caractérisé en ce qu**'il comporte une embase fixe (1) adaptée pour être reliée à la pièce d'équipement et un volet mobile (2) dont le bord inférieur (3) comporte des moyens (4) d'articulation sur le bord avant inférieur (5) correspondant de l'embase (1), l'embase et le volet comportant des empreintes complémentaires de réception du gobelet (6) et des moyens complémentaires (7) de contrôle des déplacements du volet par rapport à l'embase, comportant au moins un organe élastique (8) relié à l'une des pièces, embase (1) ou volet (2), et une came (9) à profil en dent de scie reliée à l'autre des pièces, volet (2) ou embase (1), la came à profil en dent de scie comportant des sommets et des creux (11,12,13,14,15) définis par des surfaces en rampe de la came (9) et dont les creux (11,12,13) sont adaptés pour coopérer avec l'organe élastique (8) pour délimiter différentes positions d'indexation du volet par rapport à l'embase.

2. Porte-gobelet selon la revendication 1, **caractérisé en ce que** la came à profil en dent de scie (9) comporte au moins trois creux (11,12,13) et deux sommets (14,15) délimitant une position de fermeture, une position d'ouverture intermédiaire et une position d'ouverture complète du volet par rapport à l'embase.

3. Porte-gobelet selon la revendication 1 ou 2, **caractérisé en ce que** les creux (11,12,13) de la came sont à des niveaux différents par rapport à l'axe des moyens d'articulation (4) du volet sur l'embase.

4. Porte-gobelet selon l'une quelconque des revendications précédentes, **caractérisé en ce que** les sommets (14,15) de la came (9) sont à des niveaux différents par rapport à l'axe des moyens d'articulation (4) du volet sur l'embase.

5. Porte-gobelet selon l'une quelconque des revendications précédentes, **caractérisé en ce que** l'organe élastique se présente sous la forme d'une languette élastique (8) présentant une extrémité repliée (10) adaptée pour coopérer avec la came (9).

6. Porte-gobelet selon l'une quelconque des revendications précédentes, **caractérisé en ce que** l'embase (1) et le volet (2) présentent des sections transversales complémentaires en L.

7. Porte-gobelet selon l'une quelconque des revendications précédentes, **caractérisé en ce que** l'organe élastique (8) est reliée à l'embase (1) et en ce que la came (9) est reliée au volet (2).

8. Porte-gobelet selon la revendication 7, **caractérisé en ce que** la came (9) est venue de matière avec le volet.
